# EUROPÄISCHE PATENTSCHRIFT

(11) **EP 2 196 494 B1**
(45) Veröffentlichungstag und Bekanntmachung des Hinweises auf die Patenterteilung: **26.03.2014**
(21) Anmeldenummer: 08021677.3
(22) Anmeldetag: 12.12.2008
(51) Int. Cl.: C09C 3/10, C09C 1/28, C08K 3/34, C08K 9/08

(54) **Polyamid-Schichtsilikat-Zusammensetzungen**
Polyamide layer silicate compounds
Compositions de polyamide-silicate en couche

(43) Veröffentlichungstag der Anmeldung: 16.06.2010
(73) Patentinhaber: EMS-PATENT AG, 7013 Domat/Ems (CH)
(72) Erfinder: Stoeppelmann, Georg, 7402 Bonaduz (CH); Hoffmann, Botho, 7013 Domat/Ems (CH); Hewel, Manfred, 7013 Domat/Ems (CH); Vertlib, Viacheslav, RU-Moscow 115372 (RU); Plötze, Lothar Michael Dr., 8046 Zürich (CH); Meier, Lorenz Dr., 8006 Zürich (CH); Vetterli, Bettina, 8408 Winterthur (CH); Hirayama, Martina Dr. Prof., 8537 Nussbaumen (CH)
(74) Vertreter: Pfenning, Meinig & Partner GbR

(56) Entgegenhaltungen:
- EP-A- 1 312 582
- US-A- 5 853 886
- US-A1- 2006 052 505
- US-A1- 2007 178 299
- COGNIS CORPORATION: 'Versamid 125 Material Safety Data Sheet', [Online] Gefunden im Internet: <URL:http://www.apps.cognis.com/productcata log/MSDS/MSDS000000000000138565S001E.pdf>

## Beschreibung

Die Erfindung betrifft Tonmaterial, enthaltend mindestens ein mit mindestens einem wasserlöslichen Polyamid, mindestens einem wasserlöslichen Copolyamid und/oder mindestens einem wasserlöslichen Blockcopolyamid behandeltes Schichtsilikat, wobei die Wasserlöslichkeit dann gegeben ist, wenn bei 23 °C mindestens 10 g Polyamid bzw. Copolyamid bzw. Blockpolyamid in 1000 g Wasser vollständig löslich sind,
**dadurch gekennzeichnet,**
dass der Schichtsilikatanteil bezogen auf das gesamte Tonmaterial 38 bis 60 Gew.-% und die relative Lösungsviskosität ηᵣₑₗ. des mindestens einen wasserlösliche Polyamids, des mindestens einen wasserlöslichen Copolyamids und/oder des mindestens einen wasserlöslichen Blockcopolyamids gemessen gemäß DIN EN ISO 307 in 0,5 Gew.-%iger m-Kresollösung bei 20 °C, zwischen 1,3 und 3,0 beträgt. Die Erfindung betrifft des Weiteren Nanocomposites, welche Tonmineralien homogen verteilt in einer wasserunlöslichen Thermoplast-Matrix enthalten. Diese Nanocomposites werden durch Mischen der Polyamid-Schichtsilikat-Zusammensetzung und einem wasserunlöslichen Thermoplasten in der Schmelze hergestellt.

Wasserlösliche Polyamide sind aus dem Stand der Technik bekannt. So beschreibt US 5,324,812 wasserlösliche Polyamide auf Basis zweier Carbonsäuren, einem niedermolekularen und einem hochmolekularem Polyoxyalkylendiamin. Das Carbonsäuregemisch besteht aus einer Dicarbonsäure mit 5 bis 12 C-Atomen und einer Dicarbonsäure mit 20 bis 36 C-Atomen. Als niedermolekulare Etherdiamine werden Triethylenglyokoldiamin oder Tetraethylenglykoldiamin eingesetzt. Das hochmolekulare Polyoxyalkylendiamin muss zwingend Ethylenoxid-Reste enthalten, bevorzugt kombiniert mit Polyoxypropylen-Einheiten.

Die Quellung von Tonen mit wasserlöslichen Polymeren ist ebenfalls bekannt. EP 0 747 323 beschreibt Intercalate und Exfoliate, die unabhängig vom Herstellverfahren aus Schichtsilikaten und intercalierenden Polymeren in Gegenwart eines flüssigen Trägers, hergestellt werden. Als intercalierende Polymere werden bevorzugt wasserlösliche Polymere, wie z.B. PVP und PVA eingesetzt, wobei im wesentlichen Wasser als flüssiger Träger zum Einsatz kommt. Daneben werden aber auch wasserunlösliche Polymere, wie z.B. Polyamid oder Polyether, als intercalierende Polymere beschrieben. PVA und PVP sind aber thermisch nicht stabil, die Zersetzung beginnt bereits oberhalb von 150 bzw. 200 °C und führt zu stark verfärbten und vernetzten Produkten, wobei die Wasserlöslichkeit weitgehend eingebüßt wird.

US 2006/0052505 betrifft Zusammensetzungen aus wasserlöslichen Polyamiden und Schichtsilikaten (Tonmineralien). Lösungen dieser Zusammensetzungen in Wasser werden zur Herstellung von Folien und Platten im Gießverfahren eingesetzt. Die resultierenden flächigen Formteile werden für Verpackungen, insbesondere für Chemikalien, empfohlen. Die Tonmineralien werden zur Steuerung der Lösungsviskosität der wasserlöslichen Polyamide verwendet und gleichen Molmassen- oder Konzentrations-Unterschiede der Polyamide im Gießprozess aus. Aufgrund der gestellten Aufgabe, Herstellung von wasserlöslichen Verpackungsfolien, enthalten die beschriebenen Zusammensetzungen überwiegend Polyamid und das viskositätssteuernde Tonmineral ist mit 0.5 bis maximal 30 Gew.-% deutlich im Unterschuss vorhanden.

EP 1 312 582 beschreibt mit Polyether-Blockcopolyamiden intercalierte Tone sowie Nanocomposites, hergestellt durch Kombination von Ton, Polyether-Blockcopolymamid und einem als Matrix dienenden thermoplastischen Polymeren. Die Interkalation des Schichtsilikates mit Polyether-Blockcopolyamiden und die Mischung dieser beiden Komponenten mit dem Matrixpolymeren wird stets mittels Schmelzmischen, insbesondere durch Extrusion bewerkstelligt. Bevorzugt wird die einstufige Extrusion aller drei Komponenten, d.h. ohne vorgängig durchgeführte Interkalierung des Tons. Da dieses Verfahren auf flüchtige Lösungsmittel verzichtet, kann auf das kostspielige und zeitaufwändige Trocknen verzichtet werden. Allerdings hat dieses Verfahren, bei dem die hochviskose Polymerschmelze und der Ton nur für eine kurze Zeit während des Extrusionsprozesses (0.5 - 2 Minuten) in Kontakt stehen, den großen Nachteil, dass der Ton nicht homogen im Polymer verteilt wird, so dass Ton-Agglomerate in einer nicht vernachlässigbaren Konzentration in der Matrix vorliegen.

Weiterhin verursachen Organoclays enthaltende Formmassen (Nanocomposites) störende Ablagerungen bei der Spritzgussverarbeitung. Die gefertigten Formteile weisen selbst nach langer Lagerungsdauer immer noch den Geruch nach Aminen auf, die vom sog. Hofmann-Abbau quartärer Ammoniumverbindungen herrühren.

Die heutigen kommerziellen Nanoclays, die alle mit quarternären Ammoniumionen behandelt sind, zeigen alle die oben beschriebenen Nachteile durch den Hofmann-Abbau. Auch die bisher aus dem Stand der Technik bekannten Polymer-Schichtsilikat-Zusammensetzungen, die auf den wasserlöslichen Polymeren PVA oder PVP beruhen, zeigen eine ungenügende Temperaturbeständigkeit. Die thermische Zersetzung von PVP beginnt bereits ab 150°C, während PVA oberhalb von 200°C zu Polyenen degradiert wird. Mit der Zersetzung einher geht der Verlust der ursprünglichen Eigenschaften. So sind die Zersetzungsprodukte aufgrund von Vernetzungen oder geänderter Polarität nicht mehr wasserlöslich und stark verfärbt.

Da die Mischung der Nanoclays und der zu verstärkenden Polyamide aufgrund der hohen Polyamid-Schmelzpunkte in der Regel bei Temperaturen deutlich über 200°C oder sogar über 300°C erfolgen muss, ist eine thermische Schädigung der Organoclays oder der mit PVA bzw. PVP intercalierten Tonmineralien, einschließlich einer damit verbundenen Qualitätseinbusse bei den Nano-Composite-Formmassen, unausweichlich.

Daher ist es Aufgabe der vorliegenden Erfindung, mit Polyamiden behandelte Tonminerialien (Polyamid-Schichtsilikat-Zusammensetzungen oder Tonmaterialien) mit möglichst hoher Schichtsilikat-Konzentration bereitzustellen, die eine kurzzeitige Temperaturstabilität bis 350°C aufweisen und somit auch mit hochschmelzenden, thermoplastisch verarbeitbaren Polymeren in der Schmelze gemischt werden können, ohne dass nachteilige Eigenschaftseinbussen, wie z.B. Farbe, Vernetzung, für die Nanocomposite-Formmassen resultieren und ohne dass bei der Compoundierung es zum Ausdampfen giftiger, geruchsbelästigender oder selbstentzündlicher Gase kommt. Die Schichtsilikate sollen in den erfindungsgemäßen Nanocomposites weitgehend homogen verteilt vorliegen, so dass in der Thermoplast-Matrix (insbesondere Polyamid-Matrix) praktisch keine Schichtsilikat-Agglomerate vorliegen und dass Formteile auf Basis der Nanocomposites eine hohe Zähigkeit besitzen.

Diese Aufgabe wird bezüglich des Tonmaterials mit den Merkmalen des Patentanspruchs 1, bezüglich des Verfahrens zur Herstellung des Tonmaterials mit den Merkmalen des Patentanspruchs 8, sowie bezüglich der thermoplastischen Formmasse resp. Polyamid-Schichtsilikat-Konzentrat mit den Merkmalen des Patentanspruchs 11 gelöst. Mit den Patentansprüchen 14 und 15 werden Formkörper, die aus der thermoplastischen Formmasse herstellbar sind, sowie Verwendungszwecke derartiger Formkörper angegeben. Die jeweiligen abhängigen Patentansprüche stellen dabei vorteilhafte Weiterbildungen dar.

Erfindungsgemäß wird somit ein Tonmaterial, enthaltend mindestens ein mit mindestens einem wasserlöslichen Polyamid, mindestens einem wasserlöslichen Copolyamid und/oder mindestens einem wasserlöslichen Blockcopolyamid behandeltes Schichtsilikat, bereitgestellt, bei dem der Schichtsilikatanteil bezogen auf das gesamte Tonmaterial 38 bis 60 Gew.-% beträgt.

Als "wasserlöslich" wird erfindungsgemäß ein Polyamid bezeichnet, das in reinem Wasser löslich ist, d.h. auf molekularer Ebene solvatisiert in Wasser vorliegt. Insbesondere liegt Wasserlöslichkeit dann vor, wenn mindestens 10 g, bevorzugt mindestens 50 g und besonders bevorzugt mindestens 100 g Polyamid in 1000 g Wasser bei 23 °C vollständig, d.h. ohne Bodensatz, löslich sind.

Überraschenderweise wurde gefunden, dass ein Montmorillonit, der mit einem wasserlöslichen Polyamid behandelt wurde, eine deutlich höhere Temperaturstabilität besitzt als die handelsüblichen Systeme, die Ammoniumverbindungen enthalten, sog. Organoclays. Damit ergeben sich weniger Probleme bei der Verarbeitung durch den sog. Hofmann-Abbau quarternärer Ammoniumverbindungen. Dazu gehören Geruchsbelästigung und Gefahr von Selbstentzündung der entstehenden Abbauprodukte an heißen Extruderteilen.

Weiter zeigen die erfindungsgemäß mit wasserlöslichem Polyamid behandelten Schichtsilikate und Nanocomposites eine deutlich hellere Farbe als die kommerziellen Organoclays.

Die erfindungsgemäßen Polyamid-Schichtsilikat-Konzentrate zeigen bis 350 °C eine deutlich verbesserte Temperaturstabilität, während bei den kommerziellen Nanoclays der Abbau bereits ab 200°C beginnt.

In einer bevorzugten Ausführungsform ist das mindestens eine wasserlösliche Polyamid, mindestens eine wasserlösliche Copolyamid und/oder mindestens eine wasserlösliche Blockcopolyamid ausgewählt aus der Gruppe bestehend aus wasserlöslichen Polyetheramiden, bevorzugt Polyetheramiden, die durch Polykondensation von
a) mindestens einer aliphatischen, cycloaliphatischen und/oder aromatischen Dicarbonsäure mit 6 bis 36 C-Atomen, und
b) mindestens einem aliphatischen, cycloaliphatischen und/oder aromatischen Diamin mit 2 bis 36 C-Atomen, und/oder
c) mindestens einem Diamin ausgewählt aus der Gruppe bestehend aus Diethylenglycoldiamin, Triethylenglycoldiamin, Tetraethylenglycoldiamin, 4,7,10-Trioxa-1,13-tridecandiamin, 4,7,10,13-Tetraoxa-1,16-hexadecandiamin, und/oder
d) mindestens einem Polyalkylenglycoldiamin, insbesondere Polyethylenglycoldiamine, Polypropylenglycoldiamine, Polytetraethylendiamine, und/oder
e) Lactamen und/oder Aminocarbonsäuren, bevorzugt
   ω-Aminocarbonsäuren mit 5 bis 12 C-Atomen herstellbar sind.

Unter den unter Punkt d) angeführten als "Polymer" bezeichneten Verbindungen werden erfindungsgemäß Verbindungen verstanden, die 5 bis 25 Wiederholungseinheiten aufweisen, also beispielsweise Penta-, Hexa-, Hepta- usw. -alkylenglycoldiamine.

Beim wasserlöslichen Polyamid, handelt es sich um ein kaltwasserlösliches Polyamid mit einer relativen Lösungsviskosität (ηᵣₑₗ) im Bereich von 1.3 bis 3.0, bevorzugt im Bereich von 1.4 bis 2.0, insbesondere im Bereich von 1.5 bis 1.9. Als wasserlösliches Polyamid werden bevorzugt Polyetheramide, insbesondere mit statistischem Aufbau, verwendet. Bei den zwischen den Amidbindungen liegenden Ethergruppen handelt es sich bevorzugt um Oxyethylen-Einheiten.

Die bevorzugten Polyetheramide setzen sich wie folgt zusammen:
a) aliphatische, cycloaliphatische und aromatische Dicarbonsäuren mit 6 bis 36 C-Atomen,
b) aliphatische, cycloaliphatische oder aromatische Diamine,
c) Diethylenglykoldiamin, Triethylenglykoldiamin, Tetraethylenglykoldiamin, 4,7,10-Trioxa-1,13-tridecandiamin,
d) Polyoxyalkylendiamine und gegebenenfalls Polyoxypropylen- und/oder Polyoxytetramethylen-Einheiten, wobei die Polyoxyethylen-Einheiten überwiegen,
e) Lactamen oder Aminocarbonsäuren mit 5 bis 12 C-Atomen.

### Molverhältnisse:

a:(b+c+d) = 0.8 bis 1.2
wenn b ≠ 0 dann b:(c+d) < 0.1 bis 0.5

Dabei ist es von Vorteil, wenn das mindestens eine wasserlösliche Polyamid ein Polykondensat aus
a) mindestens einer aliphatischen, cycloaliphatischen und/oder aromatischen Dicarbonsäure mit 6 bis 36 C-Atomen, bevorzugt 6 bis 24 C-Atomen, besonders bevorzugt 6 bis 12 C-Atomen, insbesondere Adipinsäure; und
b) mindestens einem Diamin ausgewählt aus der Gruppe bestehend aus Diethylenglycoldiamin, Triethylenglycoldiamin, Tetraethylenglycoldiamin, Trioxatridecandiamin, Tetraoxahexadecandiamin; oder mindestens einem Polyalkylenglycoldiamin, insbesondere Polyethylenglycoldiamine, Polypropylenglycoldiamine, Polytetraethylendiamine; bevorzugt Trioxatridecandiamin
ist.

Insbesondere finden hierbei Polykondensate aus Adipinsäure und Trioxatridecandiamin Verwendung.

Zur Regelung der Molmasse, der relativen Viskosität bzw. der Fließfähigkeit oder des MVR können bei der Herstellung der wasserlöslichen Polyamide, Copolyamide oder Blockcopolyamide dem Ansatz Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Polyalkyenglykolmonoamine, Trioxatridecanamin. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol/kg Polymer. Die Molmasse kann alternativ oder auch zusätzlich über das oben angegebene Molverhältnis (a:(b+c+d) = 0.8 bis 1.2) der Disäuren und Diamine geregelt werden.

Die relative Lösungsviskosität ηᵣₑₗ des mindestens einen wasserlösliche Polyamids, des mindestens einen wasserlöslichen Copolyamids und/oder des mindestens einen wasserlöslichen Blockcopolyamids beträgt zwischen 1,3 und 3,0, bevorzugt zwischen 1,4 und 2,0, insbesondere zwischen 1,5 und 1,9.

Weitere Vorteile ergeben sich, wenn der Schichtsilikatanteil bezogen auf das gesamte Tonmaterial bevorzugt bis 55 Gew.-%, besonders bevorzugt 38 bis 52 Gew.-% beträgt.

Ebenso ist es vorteilhaft, wenn der Anteil des mindestens einen wasserlöslichen Polyamids, des mindestens einen wasserlöslichen Copolyamids und/oder des mindestens einen wasserlöslichen Blockcopolyamids bezogen auf das gesamte Tonmaterial von 40 bis 62 Gew.-%, bevorzugt von 45 bis 62 Gew.-%, besonders bevorzugt von 48 bis 62 Gew.-% beträgt.

Die bevorzugt zum Einsatz kommenden Schichtsilikate sind dabei ausgewählt aus der Gruppe bestehend aus Vermiculit, Talk und/oder Smektiten, wobei die Smektite insbesondere Natrium-Montmorillonit, Magnesium-Montmorillonit, Calcium-Montmorillonit, Aluminium-Montmorillonit, Nontronit, Beidellit, Volkonskoit, Hectorit, Saponit, Sauconit, Sobockit, Stevensit, Svinfordit und/oder Kaolinit sind.

Bevorzugt werden unter Schichtsilikaten im erfindungsgemäßen Sinne 1:1- sowie 2:1-Schichtsilikate verstanden. In diesen Systemen sind Schichten aus SiO₄-Tetraedern mit solchen aus M(O,OH)₆-Oktaedern in regelmäßiger Weise miteinander verknüpft. M steht dabei für Metallionen, wie Al, Mg, Fe. Bei den 1:1-Schichtsilikaten sind dabei jeweils eine Tetraeder- und eine Oktaederschicht miteinander verbunden. Beispiele hierfür sind Kaolin- und Serpentin-Minerale.

Bei den 2:1-Dreischichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen besetzt, treten geladene Schichten auf. Diese negative Ladung wird durch den Einbau einwertiger Kationen, wie Kalium, Natrium oder Lithium oder zweiwertiger Kationen, wie Calcium in den Raum zwischen den Schichten ausgeglichen. Beispiele für 2:1-Schichtsilikate sind Talkum, Vermiculite sowie Smectite, wobei die Smectite, zu denen u.a. Montmorillonit und Hectorit gehören, sich wegen ihrer Schichtladung leicht mit Wasser quellen lassen. Weiterhin sind die Kationen leicht für Austauschprozesse oder Komplexbildung zugänglich.

Die Schichtdicken der Schichtsilikate betragen vor der Quellung üblicherweise 0.5 nm bis 2.0 nm, ganz besonders bevorzugt 0.8 nm bis 1.5 nm (Abstand der Schichtoberkante zur folgenden Schichtoberkante). Hierbei ist es möglich, den Schichtabstand weiter zu vergrößern, indem man das Schichtsilikat beispielsweise mit den wasserlöslichen Polyamiden, z.B. bei Temperaturen von 20°C bis 100°C über eine Verweilzeit von in der Regel 0.1 bis 24 Stunden, vorzugsweise von 0.1 bis 10 Stunden, umsetzt (Quellung). Je nach Länge der Verweilzeit und der Art des gewählten wasserlöslichen Polyamids vergrößert sich der Schichtabstand zusätzlich um 1 nm bis 15 nm, vorzugsweise um 1 nm bis 5 nm. Die Länge der Plättchen beträgt üblicherweise bis zu 800 nm, vorzugsweise bis zu 400 nm.

Die quellfähigen Schichtsilikate sind durch ihre Ionenaustauschkapazität CEC (meq/g) und ihren Schichtabstand d_{L} charakterisiert. Typische Werte für CEC liegen bei 0.7 bis 0.8 meq/g. Der Schichtabstand bei einem trockenen unbehandelten Montmorillonit liegt bei 1 nm und steigt durch Quellung mit Wasser und Belegung mit dem wasserlöslichen Polyamid auf Werte bis zu 5 nm.

Erfindungsgemäß wird ebenso ein Verfahren zur Herstellung des oben genannten Tonmaterials angegeben, bei dem
a) eine wässrige Lösung des mindestens einen wasserlöslichen Polyamids, des mindestens einen wasserlöslichen Copolyamids und/oder des mindestens einen wasserlöslichen Blockcopolyamids mit einer relativen Lösungsviskosität zwischen 1.3 und 3.0 (gemäß DIN EN ISO 307, 0.5 Gew.-%ige m-Kresollösung bei 20°C), mit
b) einer wässrigen Dispersion des mindestens einen Schichtsilikats
vermischt und nach einer Einwirkzeit (Verweilzeit) das Wasser entfernt wird. Die Verweilzeit beträgt 0.5 - 24 h, bevorzugt 0.5 - 12 h und besonders bevorzugt 0.5 - 3 h.

Eine bevorzugte Ausgestaltungsform des erfindungsgemäßen Verfahrens sieht vor, dass das mindestens eine wasserlösliche Polyamid, das mindestens eine wasserlösliche Copolyamid und/oder das mindestens eine wasserlösliche Blockcopolyamid mit einer Massenkonzentration der Lösung zwischen 0,2 und 45 Gew.-%, bevorzugt zwischen 1,0 und 20 Gew.-%, besonders bevorzugt zwischen 2,0 und 10 Gew.-% eingesetzt wird.

Ebenso ist es bevorzugt, wenn die Massenkonzentration des mindestens einen Schichtsilikats in der Dispersion zwischen 0,1 und 20 Gew.-%, bevorzugt zwischen 1,0 und 10 Gew.-%, besonders bevorzugt zwischen 1,5 und 5 Gew.-% beträgt.

Weiterhin wird erfindungsgemäß eine thermoplastische Formmasse bereitgestellt, die ein in einer wasserunlöslichen thermoplastischen Matrixphase der Formmasse ein oben erwähntes erfindungsgemäßes dispergiertes Tonmaterial enthält.

Bevorzugt ist hierbei, dass der Gewichtsanteil des Tonmaterials bezogen auf die Formmasse zwischen 1 und 50 Gew.-%, bevorzugt zwischen 4 und 33 Gew.-%, besonders bevorzugt zwischen 5 und 20 Gew.-% beträgt.

Ebenso ist es vorteilhaft, wenn der Gewichtsanteil der Matrixphase bezogen auf die Formmasse zwischen 50 und 99 Gew.-%, bevorzugt zwischen 67 und 96 Gew.-%, besonders bevorzugt zwischen 80 und 95 Gew.-% beträgt.

Ein bevorzugter Zusammensetzungsbereich ist z.B.:
(a) 1 bis 50 Gew.-% Polyamid-Schichtsilikat-Konzentrat (bevorzugt: 4 bis 33 Gew.-%, insbesondere 5 bis 20 Gew.-%), enthaltend
   (a1) 40 bis 70 Gew.-% wasserlösliches Polyamid (bevorzugt: 45 bis 66 Gew.-%, insbesondere 48 bis 62 Gew.-%) und
   (a2) 30 bis 60 Gew.-% unbehandeltes Schichtsilikat (bevorzugt: 34 bis 55 Gew.-%, insbesondere 38 bis 52 Gew.-%)
(b) 50 bis 99 Gew.-% Thermoplast (bevorzugt: 67 bis 96 Gew.-%, insbesondere 80 bis 95 Gew.-%)

Beispielhafte thermoplastische Materialien, die als Matrixphase der Formmasse dienen können, werden im Folgenden aufgezählt: Polyarylensulfide, Polylactone, Polyester, Polyurethane, Polycarbonate, Poly(meth)acrylate, Polysulfone, Polysiloxane, Polyamide, Polyetheramide, Polyesteramide und/oder Mischungen hiervon.

Z.B. können thermoplastische Polymere verwendet werden, wie Polylactone, z.B. Poly(pivalolacton), Poly(caprolacton) etc.; Polyurethane, die durch Reaktionen von Diisocyanaten hergestellt wurden, wie z.B. 1,5-Naphthalendiisocyanat, p-Phenylendiisocyanat, m-Phenylendiisocyanat, 2,4-Toluoldiisocyanat, 4,4'-Diphenylmethandiisocyanat, 3,3'-Dimethyl-4,4'-diphenyl-methandiisocyanat, 3,3'-Dimethyl-4,4'-biphenyldiisocyanat, 4,4'-Diphenylisopropylidendiisocyanat 3,3'-Dimethyl-4,4'-diphenyldiisocyanat, 3,3'-Dimethyl-4,4'-diphenylmethandiisocyanat, 3,3'-Dimethoxy-4,4'-biphenyldiisocyanat, Dianisidindiisocyanat, Tolidindiisocyanat, Hexamethylendiisocyanat, 4,4'-Diisacyanatodiphenylmethan und ähnliche; und lineare langkettige Diole, wie z.B. Poly(tetramethylenadipat), Poly(ethylenadipat), Poly(1,4-butylenadipat), Poly(ethylensuccinat), Poly(2,3-butylensuccinat), Polyetherdiole und ähnliche; Polycarbonate, wie z.B. Poly(methan-bis(4-phenyl)carbonat), Poly(1,1-ether-bis(4-phenyl)carbonat), Poly(diphenylmethan-bis(4-phenyl)carbonat), Poly(1,1-cyclohexanbis(4-phenyl)carbonat), Poly(2,2-bis-(4-hydroxyphenyl)propan)carbonat, und ähnliche; Polysulfone; Polyamide, wie z.B. Poly(4-aminobutteräure), Poly(hexamethylenadipamid), Poly(6-aminohexansäure), Poly(m-xylylenadipamid), Poly(p-xylylensebacamid), Poly(2,2,2-trimethylhexamethylenterephthalamid), Poly(metaphenylenisophthalamid), Poly(p-phenylenterephthalamid), und ähnliche; Polyester, wie z.B. Poly(ethylenazelat), Poly(ethylen-1,5-naphthalat), Poly(ethylen-2,6-naphthalat), Poly(1,4-cyclohexandimethylenterephthalat), Poly(ethylenoxybenzoat), Poly(para-hydroxybenzoat), Poly(1,4-cyclohexylidendimethylenterephthalat), Poly(1,4-cyclohexylidendimethylenterephthalat), Polyethylenterephthalat, Polybutylenterephthalat und ähnliche; Poly(arylenoxide), wie z.B. Poly(2,6-dimethyl-1,4-phenylenoxid), Poly(2,6-diphenyl-1,4-phenylenoxid) und ähnliche; Poly(arylensulfide), wie z.B. Poly(phenylensulfide) und ähnliche; Polyetherimide; Vinylpolymere und deren Copolymere, wie z.B. Polyvinylacetat, Polyvinylchloride, Polyvinylbutyral, Polyvinylidenchloride, Ethylenvinylacetat-Copolymere, und ähnliche; Polyacrylate und deren Copolymere, wie z.B. Polyethylacrylate, Poly(n-butylacrylate), Polymethylmethacrylate, Polyethylmethacrylate, Poly(n-butylmethacrylate), Poly(n-propylmethacrylate), Polyacrylnitril, Polyacrylsäure, Ethylenacrylsäure-Copolymere, Ethylenvinylalkohol-Copolymere, Acrylnitril-Copolymere, Methylmethacrylatstyren-Copolymere, Ethylenethylacrylat-Copolymere, methacrylierte Butadienstyrol-Copolymere und ähnliche; Ionomere; Poly(urethane), wie z.B. das Polymerisationsprodukt von Polyolen, wie z.B. Glycerin, Trimethylolpropan, 1,2,6-Hexantriol, Sorbitol, Pentaerythritol, Polyetherpolyole, Polyesterpolyole und ähnliche, mit einem Polyisocyanat, wie z.B. 2,4-Toluoldiisocyanat, 2,6-Toluoldiisocyant, 4,4'-Diphenylmethandiisocyanat, 1,6-Hexamethylendiisocyanat, 4,4'-Dicyclohexylmethandiisocyanat und ähnliche; und Polysulfone, wie z.B. das Reaktionsprodukt des Natriumsalzes von 2,2-bis(4-Hydroxyphenyl)propan und 4,4'-Dichlorodiphenylsulfon; Furanharze, wie z.B. Poly(furan); Celluloseester-Kunststoffe, wie z.B. Celluloseacetat, Celluloseacetatbutyrat, Cellulosepropionat und ähnliche; Silikone, wie z.B. Poly(dimethylsiloxane), Poly(dimethylsiloxane), Poly(dimethylsiloxan-co-phenylmethylsiloxane), und ähnliche; Polyether; Polyimide; Polyvinylidenhalide; Polycarbonate; Polyphenylensulfide; Polytetrafluorethylene; Polyacetale; Polysulfonate; Polyester-Ionomere; Polyolefin-Ionomere; Copolymere und Mischungen dieser zuvor genannten Polymere können ebenso verwendet werden.

Polyamide, die in der vorliegenden Erfindung genutzt werden können, können synthetische, lineare Polycarbonamide sein, gekennzeichnet durch das Vorhandensein einer sich wiederholenden Carbonamid-Gruppe als ein integraler Teil der Polymerkette, die durch mindestens zwei Kohlenstoffatome voneinander getrennt sind. Polyamide dieser Art beinhalten Polymere, die im Allgemeinen im Stand der Technik als Nylon, der durch Diamine und dibasische Säuren enthaltend die sich wiederholende Einheit, dargestellt durch die allgemeine Formel

-NHCOR¹COHNR²-

erhalten wird, bekannt sind,
wobei R¹ eine Alkylengruppe aus mindestens 2 Kohlenstoffatomen, bevorzugt aus 2 bis 11, oder Arylen enthaltend mindestens 6 Kohlenstoffatome, bevorzugt 6 bis 17 Kohlenstoffatome ist; und R² ausgewählt ist aus R¹ und Arylgruppen. Ebenso können Copolyamide und Terpolyamide, die durch bekannte Verfahren, z.B. durch Kondensation von Hexamethylendiamin und einer Mischung dibasischer Säuren bestehend aus Terephthalsäure und Adipinsäure erhalten werden, enthalten sein. Die oben beschriebenen Polyamide sind im Stand der Technik bekannt und umfassen z.B. die Copolyamide von 30 % Hexamethylendiammoniumisophthalat und 70 % Hexamethylendiammoniumadipat, Poly(hexamethylenadipamid)(Nylon 6,6), Poly(hexamethylensebacamid) (Nylon 6,10), Poly(hexamethylenisophthalamid), Poly(hexamethylenterephthalamid), Poly(heptamethylenpimelamid) (Nylon 7,7), Poly(octamethylensuberamid) (Nylon 8,8), Poly(nonamethylenazelamid) (Nylon 9,9), Poly(decamethylenazelamid) (Nylon 10,9), Poly(decamethylensebacamid) (Nylon 10,10), Poly(bis(4-Aminocyclohexyl)methan-1,10-decan-carboxamid)), Poly(m-xylylenadipamid), Poly(p-xylylensebacamid), Poly(2,2,2-Trimethylhexamethylenterephthalamid), Poly(piperazinsebacamid), Poly(p-phenylenterephthalamid), Poly(metaphenylenisophthalamid) und ähnliche.

Weitere geeignete Polyamide können durch Polymerisation von Aminosäuren und deren Derivaten gebildete Polyamide sein, wie z.B. Lactame. Beispiele für diese geeignete Polyamide sind Poly(4-aminobuttersäure) (Nylon 4), Poly(6-aminohexansäure) (Nylon 6), Poly(7-aminoheptansäure) (Nylon 7), Poly(8-aminooctansäure) (Nylon 8), Poly(9-aminononansäure) (Nylon 9), Poly(10-aminodecansäure) (Nylon 10), Poly(11-aminoundecansäure) (Nylon 11), Poly(12-aminododecansäure) (Nylon 12) und ähnliche.

Bevorzugte Polyamide für die Verwendung in der Ausführung der vorliegenden Erfindung sind Poly(caprolactam), Poly(12-aminododecansäure), Poly(hexamethylenadipamid), Poly(m-xylylenadipamid), und Poly(6-aminohexansäure) und deren Copolymere und/oder Mischungen, für ihre weit verbreitete Anwendung.

Bei den Polyamiden werden amorphe und teilkristalline Typen, aliphatische, cycloaliphatische und teilaromatische Polyamide bevorzugt. Besonders bevorzugte Polyamide sind dabei: PA 6, 66, 69, 610, 612, 614, 46, MXD6-21, MXDI, MXDT, 12, 11, 1010, 1012, 1014, 1212, 4I, 5I, 6I, 8I, 9I, 10I, 12I, 4T, 5T, 6T, 8T, 9T, 10T, 12T, 6-12CHDS, MACM9-18, PACM9-18 sowie Copolymere und Mischungen davon, bevorzugt PA 46,6, 66, 11, 12, MXD6, MXD10, MXD12, MXDI, MXD6/MXDI, 6T/6I, 6T/66, 6T/10T, 9T und 10T. Auch Blends oder Polymerlegierungen aus den zuvor genannten Komponenten kommen in Frage.

Die vorteilhaften Eigenschaften der Tonmaterialien kommen insbesondere dann zum Tragen, wenn die Compoundierung mit dem Matrixpolymer (Herstellung der Nanocomposites) bei Temperaturen über 200 °C, insbesondere über 240 °C, ausgeführt wird. Somit profitieren auch Nanocomposites mit tieferschmelzender Matrix, wie z.B. auf Basis von PA11, PA12, PA1010 oder PA6, von der hohen Temperaturbeständigkeit der erfindungsgemäßen Tonmaterialien, da deren Herstellung und Verarbeitung bei Temperaturen im Bereich von 220 bis 280°C erfolgt.

Bevorzugt eingesetzt werden die neuen Polyamid-Schichtsilikat-Konzentrate für die Herstellung von Nanocomposites auf Basis von höher schmelzenden Polyamiden, die einen Schmelzpunkt von größer 240°C aufweisen, wie z.B. PA46, 46/4T, 46/6T, 46/66/6T, 4T/4I/46, 4T/6T, 4T/6T/66, MXD6, PA66, PA6T/66, PA6T/6I, PA6T/6I/66, PA6T/10T, PA9T, PA10T, PA12T, PA11/10T, PA12/10T, PA10T/1010.

Weitere Polymere, die im Verfahren der vorliegenden Erfindung angewandt werden können, sind lineare Polyester. Die Art der Polyester ist nicht entscheidend und die bestimmten Polyester, die für die Verwendung in einer bestimmten Situation ausgewählt sind, hängen im Wesentlichen von den gewünschten physikalischen Eigenschaften und Merkmalen, z.B. der Reißfestigkeit, dem Modul und ähnlichem, ab. Somit kann eine Vielzahl von linearen thermoplastischen Polyestern einschließlich kristallinen und amorphen Polyestern, die in ihren physikalischen Eigenschaften stark variieren, für die Verwendung in der vorliegenden Erfindung geeignet sein.

Der bestimmte Polyester, der für die Verwendung gewählt wird, kann ein Homopolyester oder ein Copolyester, oder, wie gewünscht, eine Mischung daraus, sein. Polyester werden normalerweise durch die Kondensation von organischen Dicarbonsäuren und organischen Diolen gebildet, und, deshalb werden illustrative Beispiele von geeigneten Polyestern weiter unten anhand dieser Diole und Dicarbonsäure-Precursoren beschrieben.

Polyester, die für die Verwendung in der vorliegenden Erfindung geeignet sein können, sind durch Kondensation von aromatischen, cycloaliphatischen, und aliphatischen Diolen mit aliphatischen, aromatischen und cycloaliphatischen Dicarbonsäuren abgeleitet und können cycloaliphatische, aliphatische oder aromatische Polyester sein. Beispiele für geeignete cycloaliphatische, aliphatische und aromatische Polyester, die in der Ausführung der vorliegenden Erfindung verwendet werden können, sind Poly(ethylenterephthalat), Poly(cyclohexlendimethylen), Poly(ethylendodecat), Poly(butylenterephthalat), Poly(ethylennaphthalat), Poly(ethylen(2,7-naphthalat)), Poly(methaphenylenisophthalat), Poly(glycolsäure), Poly(ethylensuccinat), Poly(ethylenadipat), Poly(ethylensebacat), Poly(decamethylenazelat), Poly(ethylensebacat), Poly(decamethylenadipat), Poly(decamethylensebacat), Poly(dimethylpropiolacton), Poly(parahydroxybenzoat), Poly(ethylenoxybenzoat), Poly(ethylenisophthalat), Poly(tetramethylenterephthalat), Poly(hexamethylenterephthalat), Poly(decamethylenterephthalat), Poly(1,4-cyclohexandimethylenterephthalat) (trans), Poly(ethylen-1,5-naphthalat), Poly(ethylen-2,6-naphthalat), Poly(1,4-cyclohexylendimethylenterephthalat), und Poly(1,4-cyclohexylendimethylenterephthalat. Polyester-Komponenten, die durch die Kondensation eines Diols und einer aromatischen Dicarbonsäure entstehen, sind für die Verwendung in der vorliegenden Erfindung bevorzugt.

Beispiele für solche geeigneten aromatischen Carbonsäuren sind Terephthalsäure, Isophthalsäure und ophthalsäure, 1,3-Napthalendicarbonsäure, 1,4 Napthalendicarbonsäure, 2,6-Napthalendicarbonsäure, 2,7-Napthalendicarbonsäure, 4,4'-Diphenyldicarbonsäure, 4,4'-Diphenylsulfphondicarbonsäure, 1,1,3-Trimethyl-5-carboxy-3-(p-carboxyphenyl)-idan, Diphenylether-4,4'-Dicarbonsäure, bis-p(Carboxyphenyl)methan und ähnliche. Von den zuvor genannten aromatischen Dicarbonsäuren sind diejenigen für die Verwendung in der Ausführung der vorliegenden Erfindung bevorzugt, die auf einem Benzolring (z.B. Terephthalsäure, Isophthalsäure, Orthophthalsäure) basieren. Unter diesen Säure-Precursoren ist Terephthalsäure besonders bevorzugt als Säure-Precursor, da sie zu Polyestern, die während des Schmelzprozesses weniger anfällig hinsichtlich des Abbaus und dimensional stabiler sind.

Bevorzugte Polyester für die Verwendung in der Praxis der vorliegenden Erfindung sind Poly(ethylenterephthalat), Poly(butylenterephthalat), Poly(1,4-cyclohexylendimethylenterephthalat) und Poly(ethylennaphthalat) und Copolymere und Mischungen daraus. Von diesen ausgewählten Polyestern ist besonders bevorzugt Poly(ethylenterephthalat), aufgrund seiner exzellenten mechanischen Stärke und Herstellbarkeit.

Ebenso ist es möglich und vorteilhaft, dass die Formmasse die üblichen Additive und/oder Schlagzähmodifikatoren beinhalten kann, die bevorzugt mit einem Gewichtsanteil von 0,3 bis 30 Gew.-%, besonders bevorzugt zwischen 0,5 und 20 Gew.-% bezogen auf die Formmasse, enthalten sind.

Die Formmassen können als Füllstoffe faserförmige oder teilchenförmige Füllmaterialien in Mengen von 5 bis 60 Gew.-%, insbesondere in Mengen von 5 bis 50 Gew.-%, pro 100 Gewichtsteilen der Nanocomposites (bestehend aus Komponenten (a) und (b)), enthalten. Beispiele geeigneter faserförmiger Füllstoffe sind Glasfasern, insbesondere E-Glasfasern, Kohlenstofffasern, Metallfasern, Kaliumtitanatwhisker, oder Aramidfasern. Bei der Verwendung von Glasfasern können diese zur besseren Verträglichkeit mit dem Matrixmaterial mit einer Schlichte und einem Haftvermittler ausgerüstet sein. Die verwendeten Kohlenstoff- und Glasfasern mit einem kreisförmigen Querschnitt haben im Allgemeinen einen Durchmesser im Bereich von 5 bis 20 µm. Flache Glasfasern, die einen nicht-kreisförmigen, sondern ovalen, elliptischen, cocoon-artigen, rechteckigen oder nahezu recheckigen Querschnitt besitzen, weisen ein Verhältnis der Querschnittsachsen von 2 bis 10, insbesondere von 3 bis 5 auf. Die Einarbeitung der runden oder flachen Glasfasern kann sowohl in Form von Kurzglasfasern als auch in Form von Endlossträngen (Rovings) erfolgen.

Beispiele geeigneter teilchenförmiger Füllstoffe sind Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Glaskugeln.

Die erfindungsgemäßen Formmassen können darüber hinaus weitere Zusatzstoffe enthalten. Als solche Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleitmittel und Entformungsmittel, Flammschutzmittel, Farbstoffe, Pigmente und Weichmacher zu nennen.

Erfindungsgemäß wird ebenso ein Formkörper bereitgestellt, der aus einer zuvor beschriebenen Formmasse herstellbar ist. Verwendungszwecke derartiger Formkörper sind beispielsweise Verwendungen als Rohr, Fitting, Profil für den Transport von Gasen, Druckluftleitung, Folie, Behälter für Verpackungszwecke, Gehäuse für Industrie- und Konsumgüter oder Handy-Gehäuse.

Vorliegende Erfindung wird anhand der nachfolgenden Beispiele näher erläutert.

In den Beispielen und Vergleichsbeispielen wurden nachfolgend genannte Materialien verwendet:
- PA 12:: Grilamid L20, EMS-CHEMIE AG, Schweiz
- PA 6:: Grilon F34, EMS-CHEMIE AG, Schweiz
- PA66: Radipol A45, Radici, Italien
- PA 6T/10T:: Grivory HT3, EMS-CHEMIE AG, Schweiz
- WL-PA:: wasserlösliches Polyamid aus 4,7,10-Trioxatridecan-1,13-diamin und Adipinsäure, gemäß Beispiel 1
- Tonmaterial A:: Polyamid-Schichtsilikat-Zusammensetzung gemäß Beispiel 2a
- Tonmaterial B:: Polyamid-Schichtsilikat-Zusammen- setzung gemäß Beispiel 2b
- Organoclay:: Cloisite A20, ein mit quartären Ammoniumverbindungen behandelter Montmorillonit, Southern Clay Products Inc., USA
- Glasfaser: Vetrotex 995, Frankreich

Die Prüfkörper wurden auf einer Arburg Spritzgießanlage hergestellt, wobei die Zylindertemperaturen für die Beispiele mit PA6 und PA12 im Bereich von 240°C bis 280°C und für die Beispiele mit PA6T/10T im Bereich von 300°C bis 320°C lagen. Die Formtemperatur betrug bei PA6 oder PA12 60 bis 80°C und bei PA6T/10T ca. 120°C. Die Drehzahl wurde so gewählt, dass sich eine Scheckenumfangsgeschwindigkeit von 15 m/min ergab.

Die Messungen wurden nach folgenden Normen und an folgenden Prüfkörpern durchgeführt.

Zug-E-Modul, Streckspannung, Dehnung bei Streckspannung:
ISO 527 mit einer Zuggeschwindigkeit von 1 mm/min
ISO-Zugstab, Norm: ISO/CD 3167, Typ A1, 170 x 20/10 x 4 mm, Temperatur 23 °C

Reißfestigkeit und Reißdehnung:
ISO 527 mit einer Zuggeschwindigkeit von 50 mm/min
ISO-Zugstab, Norm: ISO/CD 3167, Typ A1, 170 x 20/10 x 4 mm, Temperatur 23°C

Schmelztemperatur (Tm)
ISO-Norm 11357-1/-2
Granulat

Die Differential Scanning Calorimetry (DSC) wurde mit Aufheizrate von 20 °C/min durchgeführt.
Relative Viskosität:
DIN EN ISO 307, in 0,5 Gew.-%-iger m-Kresollösung, Temperatur 20 °C
MVR: (Melt volume rate)
nach ISO 1133 bei 275°C und einer Belastung von 5 kg
HDT A (1.8 MPa)
ISO 75
ISO-Schlagstab 80 x 10 x 4 mm

### Aschegehalt:

Die Tonmineral-Konzentration im Tonmaterial oder Nanocomposite wird durch Veraschen bestimmt. Hierzu wird Granulat in einen Platintiegel eingewogen und bis zur Gewichtskonstanz im Muffeloffen bei 550°C verascht.

### TGA:

Die TGA-Kurven wurden mittels einem TA Instruments TGA Q500 aufgenommen; die Proben wurden im Platintiegel in Stickstoffatmosphäre mit einer Aufheizgeschwindigkeit von 20 K/mm auf 500°C aufgeheizt, wobei der Gewichtsverlust registriert wurde.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

Die Herstellung der Polyamid-Schichtsilikat-Konzentrate erfolgt bevorzugt über die wässrige Phase, d.h. im ersten Schritt wird die wässrige Lösung des wasserlöslichen Polyamids mit dem Schichtsilikat oder einer Dispersion des Schichtsilikates in Wasser zusammengebracht. Die Wasserkonzentration der Mischung aus wasserlöslichem Polyamid, Schichtsilikat und Wasser liegt im Bereich von 2 bis 98 Gew.-%, bevorzugt im Bereich von 5 bis 90 Gew.-% und besonders bevorzugt im Bereich zwischen 10 und 80 Gew.-%. Nach einer Misch- und Quellphase wird das Wasser durch Trocknen entzogen. Hierzu wird obige Lösung/Dispersion bei 80 bis 100°C eingedampft oder der Sprühtrocknung unterzogen. Optional ist es aber auch möglich, dass vor der eigentlichen Trocknung eine Aufkonzentration der wässrigen Mischung/Dispersion betreffend den behandelten Ton mittels Zentrifuge erfolgt. Hierbei wird Wasser, aber auch überschüssiges wasserlösliches Polyamid entfernt, so dass mit diesem Verfahren auch höher konzentrierte Tonmaterialien, d.h. mit niedrigerem Gehalt an wasserlöslichem Polyamid, erhalten werden können.

Die alternative Herstellung der Tonmaterialien erfolgt durch Compoundierung der Tonminerialien mit dem wasserlöslichen Polyamid, wobei kein oder nur wenig Wasser, wie z.B. 2 bis 10 Gew.-%, bezogen auf das gesamte Tonmaterial, zum Einsatz kommt.

Das zugesetzte Wasser wird in der Entgasungszone des Extruders ganz oder teilweise aus der Polyamid-Schichtsilikat-Zusammensetzung entfernt, so dass eine störungsfreie Austragung und Granulierung der Formmasse gewährleistet ist.

### Beispiele für Herstellung:

### Beispiel 2A

Lösung 1: 37.5 g eines wasserlöslichen Polyamids werden in 500 g Wasser bei Raumtemperatur gelöst.

Lösung 2: 25 g Schichtsilikat (Cloisite Na+) werden in 975 g Wasser mit Hilfe eines Ultraturrax und eines Ultraschallstabes (10 Minuten Ultraschall) dispergiert.

Die beiden Lösungen A und B werden vereinigt, eine Stunde lang gerührt und dann 12 Stunden stehen gelassen.

Durch Trocknen bei 80°C wird das Wasser entfernt. Danach wird das Konzentrat durch grobes Mahlen in eine für die Compoundierung dosierbare Form überführt.

Es wird ein Polyamid-Schichtsilikat-Konzentrat erhalten, bestehend aus 60 Gew.-% wasserlöslichem Polyamid und 40 Gew.-% Schichtsilikat.

### Beispiel 2B

Das Tonmaterial B wird analog dem Beispiel 2A hergestellt, wobei als Tonmineral das Somasif ME100 (CO-OP Chemicals, Japan) verwendet wird.

### Nanocomposites

### Beispiele 3 bis 6 und Vergleichsbeispiele VB3 bis VB5

Die erfindungsgemäßen Nanocomposites werden durch Schmelzemischen von thermoplastischen Polymeren mit den oben beschriebenen Polyamid-Schichtsilikat-Konzentraten erhalten. Dabei werden die mittels dem wasserlöslichen Polyamid behandelten Tone homogen im Matrixpolymeren dispergiert. Aufgrund der sehr guten Quelleigenschaften der wässrigen Polyamidlösungen und der hervorragenden Verträglichkeit der wasserlöslichen Polyetheramide mit vielen Matrixpolymeren, insbesondere mit anderen Polyamiden, findet eine vollständige Dispergierung der Tonteilchen statt, so dass die erfindungsgemäßen Nanocomposites nahezu frei von irgendwelchen Ton-Agglomeraten sind.

### Herstellung

Wasserunlösliches Polyamid, Polyamid-Schichtsilikat-Konzentrat und etwaige Additive werden in den Einzug eines gleichdrehenden Zweiwellenextruders (WP ZSK 25) dosiert und unter den in Tabelle 1 und 2 angegebenen Bedingungen extrudiert.

### Herstellung des wasserlöslichen Polyamids (Beispiel 1)

59.82 kg Adipinsäure, 90.18 kg Trioxatridecandiamin und 10 kg Wasser wurden in einen Reaktor eingefüllt, mit Stickstoff inertisiert und auf 245 °C aufgeheizt. Sobald diese Temperatur erreicht wurde, begann die Entspannung. Nach Erreichen dieser Temperatur wurde der Reaktor innerhalb einer 1 h auf Normaldruck entspannt. Die Polymerschmelze wurde dann für eine weitere Stunde unter Rühren bei 245 °C gehalten, wobei das Reaktionswasser bei Normaldruck durch Überleiten von Stickstoff entfernt wurde. Nach Aufpressen von 5 bar Stickstoff wurde der Reaktorinhalt durch eine Düsenplatte ausgetragen. Nach Kühlung der Polymerstränge auf einem Fluidbett wurde diese granuliert.

Das gebildete Polyetheramid hatte eine relative Lösungsviskosität von 1.93, eine COOH-Endgruppenkonzentration von 31 mmol/kg sowie eine NH₂-Endgruppenkonzentration von 38 mmol/kg und war gut kaltwasserlöslich.

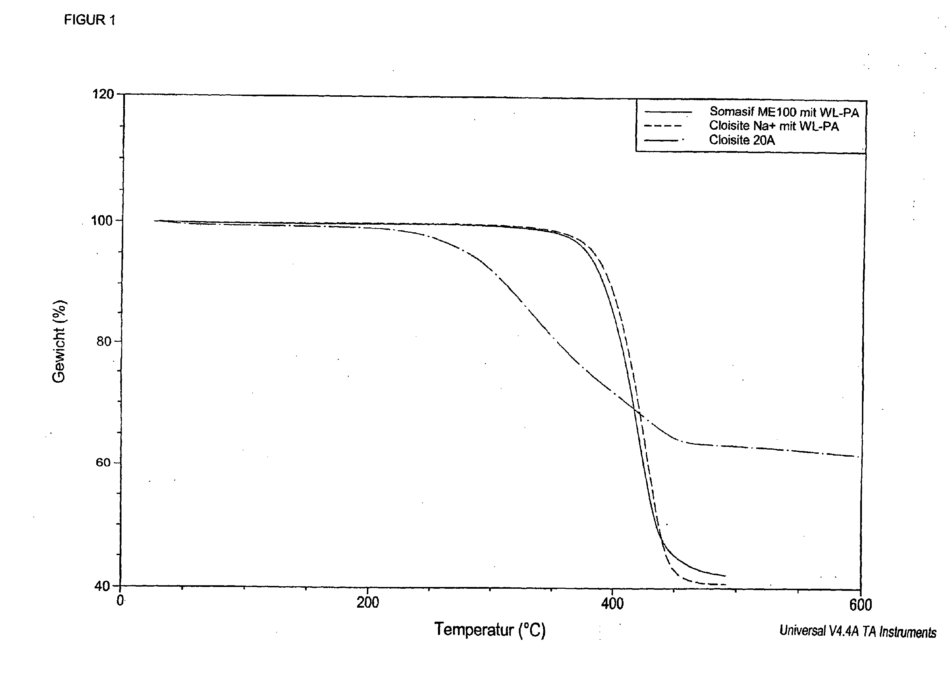

Figur 1 zeigt den Gewichtsverlust, den verschiedene Tonmaterialien beim Aufheizen mit einer Geschwindigkeit von 20 k/min auf 500 °C in Stickstoff erleiden (TGA: Thermogravimetrische Analyse). Der Organoclay Cloisite A20 (ein Tonmaterial des Standes der Technik), ein mit quarternären Ammoniumverbindungen behandelter Montmorillonit, erleidet bereits ab 200 °C einen massiven Gewichtsverlust. D.h. oberhalb von 200 °C tritt Zersetzung (Hofmann-Abbau) und Abdampfen des Zersetzungsprodukts ein. Diese flüchtigen Zersetzungsprodukte führen bei der Verarbeitung zu nicht akzeptablen Einschränkungen und Qualitätseinbußen. Beim Spritzguss entstehen beispielsweise bereits nach wenigen Zyklen deutliche Ablagerungen in der Form und/oder an den Formkörpern. Bei der Extrusion von Flachfolien verursachen derartige Ablagerungen auf den Abzugswalzen die Bildung von Löchern in der Folie.

Dagegen sind die erfindungsgemäßen Tonmaterialien A (Beispiel 2A) und B (Beispiel 2B), die mit wasserlöslichem Polyamid behandelten Montmorillonite Natrium-Closite (Cloisite Na+) und Somasif ME100, bis zu einer Temperatur von 360°C stabil, d.h. es tritt weder eine Zersetzung noch ein Ausdampfen von Inhaltsstoffen auf.

Die Beispiele und Vergleichsbeispiele zeigen, dass die Differenz der E-Moduli von erfindungsgemäßem Nanocomposite und dazugehöriger Matrix gleich oder leicht höher ist als die Differenz der E-Moduli von konventionellem Nanocomposite und der entsprechenden Matrix. D.h. die erfindungsgemäßen Tonmaterialien bewirken eine mindestens gleiche hohe Versteifung gegenüber der zugrundeliegenden Polymermatrix als die nach dem Stand der Technik modifizierten Tone. Die erfindungsgemäßen Nanocomposites zeichnen sich insgesamt durch gute mechanische und thermische Eigenschaften aus. Insbesondere wurde beobachtet, dass die neuen Nanocomposites tendenziell merklich zäher sind, was sich in einer höheren Reißdehnung im Vergleich zu den Nanocomposites des Standes der Technik manifestiert (z.B. Vergleich von Bsp. 3 mit VB3b, wobei die gemessenen Reisdehnungen bei 230 % bzw. 170 % liegen oder Vergleich von Bsp. 4 mit VB4b, wobei die Reißdehnungen 40% bzw. 4% betragen). Granulat sowie Formteile aus den Nanocomposites VB3b, VB4b und VB5b riechen unangenehm nach Aminen, während Granulat und Formteile aus den erfindungsgemäßen Nanocomposites einen neutralen, polyamidtypischen Geruch aufweisen. Vorteilhaft ist auch, dass während der Herstellung und Verarbeitung der erfindungsgemäßen Nanocomposites keine giftigen, entflammbaren Gase abgegeben werden.

**Tabelle 1: Beispiele 3 und 4 sowie Vergleichsbeispiele VB3 und VB4**

| **Zusammensetzung** | **Einheit** | **3** | **VB3a** | **VB3b** | **VB3c** | **4** | **VB4a** | **VB4b** | **VB4c** |
|---|---|---|---|---|---|---|---|---|---|
| PA12 (Grilamid L20) | Gew.-% | 89.2 | 93.2 | 92.7 | 99.2 | | | | |
| PA6 (Grilon F34) | Gew.-% | | | | | 89.2 | 93.2 | 92.7 | 99.2 |
| Tonmaterial A | Gew.-% | 10.0 | | | | 10.0 | | | |
| Organoclay | Gew.-% | | | 6.5 | | | | 6.5 | |
| WL-PA | Gew.-% | | 6.0 | | | | 6.0 | | |
| Hitzestablisierung | Gew.-% | 0.8 | 0.8 | 0.8 | 0.8 | 0.8 | 0.8 | 0.8 | 0.8 |

| **Compoudierung** | | | | | | | | | |
|---|---|---|---|---|---|---|---|---|---|
| Temperaturbereich | °C | 230-240 | 230-240 | 230-240 | 230-240 | 250-260 | 250-260 | 250-260 | 250-260 |
| Schneckendrehzahl | Upm | 450 | 450 | 450 | 450 | 450 | 450 | 450 | 450 |
| Entgasung | mbar | 150 | 150 | 150 | 150 | 150 | 150 | 150 | 150 |
| Massetemperatur | °C | 260 | 258 | 257 | 260 | 282 | 280 | 281 | 279 |
| Durchsatz | kg/h | 15 | 15 | 15 | 15 | 15 | 15 | 15 | 15 |

| **Eigenschaften** | | | | | | | | | |
|---|---|---|---|---|---|---|---|---|---|
| Schmelzpunkt | °C | 178 | - | 178 | - | 220 | - | 220 | - |
| MVR (270°C/5kg) | cm³/10min | 24 | 40 | 28 | 40 | 32 | 40 | 31 | 40 |
| Aschegehalt | Gew.-% | 3.8 | < 0.1 | 4.1 | < 0.1 | 3.8 | < 0.1 | 4.0 | < 0.1 |
| Zug-E-Modul | MPa | 1930 | 1500 | 2050 | 1600 | 4100 | 2800 | 4400 | 3200 |
| Streckspannung | MPa | 52 | 47 | 50 | 48 | 93 | 72 | 89 | 85 |
| Dehnung bei Streckspannung | % | 5.1 | 5.1 | 5 | 5 | 4.3 | 4.3 | 4.0 | 4.0 |
| Reissfestigkeit | MPA | 58 | 54 | 47 | 43 | 30 | 40 | 100 | 51 |
| Reissdehnung | % | 230 | 280 | 170 | 200 | 40 | 80 | 4 | 20 |
| HDT A | °C | 57 | 50 | 50 | 50 | 94 | 65 | 97 | 65 |
| Freisetzung von Aminen bei Extrusion | - | nein | nein | ja | nein | nein | nein | ja | nein |
| Formablagerung SPG | - | nein | nein | ja | nein | nein | nein | ja | nein |
| Ton-Agglomerate (Lichtmikroskopie) | - | prakt. keine | - | einige | - | prakt. keine | - | einige | - |
| Geruch der Formteile | - | neutral | neutral | nach Amin | neutral | neutral | neutral | nach Amin | neutral |

**Tabelle 2: Beispiel 5 sowie Vergleichsbeispiel VB5**

| **Zusammensetzung** | **Einheit** | **5** | **VB5a** | **VB5b** | **VB5c** | **6** |
|---|---|---|---|---|---|---|
| PA6T/10T | Gew.-% | 89.2 | 93.2 | 92.7 | 99.2 | |
| PA6 | Gew.-% | | | | | 37.1 |
| Pa66 | Gew.-% | | | | | 37.1 |
| Glasfaser | Gew.-% | | | | | 15 |
| Tonmaterial A | Gew.-% | 10.0 | | | | 10 |
| Organoclay | Gew.-% | | | 6.5 | | |
| WL-PA | Gew.-% | | 6.0 | | | |
| Hitzestabilisierung | Gew.-% | 0.8 | 0.8 | 0.8 | 0.8 | 0.8 |
| **Compoundierung** | | | | | | |
| Temperaturbereich | °C | 300-330 | 300-330 | 300-330 | 300-330 | 270-290 |
| Schneckendrehzahl | Upm | 400 | 400 | 400 | 400 | 400 |
| Entgasung | mbar | 150 | 150 | 150 | 150 | 150 |
| Massetemperatur | °C | 330 | 330 | 328 | 332 | 285 |
| Durchsatz | kg/h | 15 | 15 | 15 | 15 | 15 |
| **Eigenschaften** | | | | | | |
| Schmelzpunkt | °C | 295 | - | 295 | - | 260 |
| MVR (320°C/5kg) | cm³/10min | 38 | 80 | 22 | 108 | - |
| Aschegehalt | Gew.-% | 3.6 | < 0.1 | 3.8 | < 0.1 | 3.7 |
| Zug-E-Modul | MPa | 4000 | 2700 | 3800 | 3000 | 6300 |
| Reissfestigkeit | MPA | 82 | 82 | 55 | 70 | 105 |
| Reissdehnung | % | 6 | 6 | 5 | 6 | 4 |
| HDT A | °C | 120 | 105 | 128 | 118 | 195 |
| Freisetzung von Aminen bei Extrusion | - | nein | nein | ja | nein | nein |
| Formablagerung SPG | - | nein | nein | ja | nein | nein |
| Ton-Agglomerate (Mikroskopie) | - | keine | - | einige | - | keine |
| Geruch der Formteile | - | neutral | neutral | nach Amin | neutral | neutral |

## Patentansprüche

1. Tonmaterial, enthaltend mindestens ein mit mindestens einem wasserlöslichen Polyamid, mindestens einem wasserlöslichen Copolyamid und/oder mindestens einem wasserlöslichen Blockcopolyamid behandeltes Schichtsilikat, wobei die Wasserlöslichkeit dann gegeben ist, wenn bei 23 °C mindestens 10 g Polyamid bzw. Copolyamid bzw. Blockpolyamid in 1000 g Wasser voliständig löslich sind,
**dadurch gekennzeichnet,**
**dass** der Schichtsilikatanteil bezogen auf das gesamte Tonmaterial 38 bis 60 Gew.-% und die relative Lösungsviskosität η_{rel.} des mindestens einen wasserlösliche Polyamids, des mindestens einen wasserlöslichen Copolyamids und/oder des mindestens einen wasserlöslichen Blockcopolyamids gemessen gemäß DIN EN ISO 307 in 0,5 Gew.-%iger m-Kresollösung bei 20 °C, zwischen 1,3 und 3,0 beträgt.

2. Tonmaterial nach Anspruch 1, **dadurch gekennzeichnet, dass** das mindestens eine wasserlösliche Polyamid, mindestens eine wasserlösliche Copolyamid und/oder mindestens eine wasserlösliche Blockcopolyamid ausgewählt ist aus der Gruppe bestehend aus wasserlöslichen Polyetheramiden, bevorzugt Polyetheramiden, die durch Polykondensation von
a) mindestens einer aliphatischen, cycloaliphatischen und/oder aromatischen Dicarbonsäure mit 6 bis 36 C-Atomen, und
b) mindestens einem aliphatischen, cycloaliphatischen und/oder aromatischen Diamin mit 2 bis 36 C-Atomen, und/oder
c) mindestens einem Diamin ausgewählt aus der Gruppe bestehend aus Diethylenglycoldiamin, Triethylenglycoldiamin, Tetraethylenglycoldiamin, 4,7,10-Trioxa-1,13-tridecandiamin, 4,7,10,13-Tetraoxa-1,16-hexadecandiamin, und/oder
d) mindestens einem Polyalkylenglycoldiamin, insbesondere Polyethylenglycoldiamine, Polypropylenglycoldiamine, Polytetraethylendiamine, und/oder
e) Lactamen und/oder Aminocarbonsäuren, bevorzugt ω-Aminocarbonsäuren mit 5 bis 12 C-Atomen herstellbar sind.

3. Tonmaterial nach einem der vorhergehenden Ansprüche, **dadurch gekennzeichnet, dass** das mindestens eine wasserlösliche Polyamid ein Polykondensat aus
a) mindestens einer aliphatischen, cycloaliphatischen und/oder aromatischen Dicarbonsäure mit 6 bis 36 C-Atomen, bevorzugt 6 bis 24 C-Atomen, besonders bevorzugt 6 bis 12 C-Atomen, insbesondere Adipinsäure; und
b) mindestens einem Diamin ausgewählt aus der Gruppe bestehend aus Diethylenglycoldiamin, Triethylenglycoldiamin, Tetraoxahexadecandiamin, Tetraethylenglycoldiamin, Trioxatridecandiamin; oder mindestens einem Polyalkylenglycoldiamin, insbesondere Polyethylenglycoldiamine, Polypropylenglycoldiamine, Polytetraethylendiamine; bevorzugt Trioxatridecandiamin
ist.

4. Tonmaterial nach einem der vorhergehenden Ansprüche, **dadurch gekennzeichnet, dass** die relative Lösungsviskosität ηᵣₑₗ. des mindestens einen wasserlösliche Polyamids, des mindestens einen wasserlöslichen Copolyamids und/oder des mindestens einen wasserlöslichen Blockcopolyamids zwischen 1,4 und 2,0, insbesondere zwischen 1,5 und 1,9 beträgt.

5. Tonmaterial nach einem der vorhergehenden Ansprüche, **dadurch gekennzeichnet, dass** der Schichtsilikatanteil bezogen auf das gesamte Tonmaterial 38 bis 55 Gew.-%, bevorzugt 38 bis 52 Gew.-% beträgt.

6. Tonmaterial nach einem der vorhergehenden Ansprüche, **dadurch gekennzeichnet, dass** der Anteil des mindestens einen wasserlöslichen Polyamids, des mindestens einen wasserlöslichen Copolyamids und/oder des mindestens einen wasserlöslichen Blockcopolyamids bezogen auf das gesamte Tonmaterial von 40 bis 62 Ges.-%, bevorzugt von 45 bis 62 Gew.-%, besonders bevorzugt von 48 bis 62 Gew.-% beträgt.

7. Tonmaterial nach einem der vorhergehenden Ansprüche, **dadurch gekennzeichnet, dass** das mindestens eine Schichtsilikat ausgewählt ist aus der Gruppe bestehend aus Vermiculit, Talk und/oder Smektiten, wobei die Smektite insbesondere Natrium-Montmorillonit, Magnesium-Montmorillonit, Calcium-Montmorillonit, Aluminium-Montmorilionit, Nontronit, Beidellit, Volkonskoit, Hectorit, Saponit, Sauconit, Sobockit, Stevensit, Svinfordit und/oder Kaolinit.

8. Verfahren zur Herstellung eines Tonmaterials nach einem der vorhergehenden Ansprüche, bei dem
a) eine wässrige Lösung des mindestens einen wasserlöslichen Polyamids, des mindestens einen wasserlöslichen Copolyamids und/oder des mindestens einen wasserlöslichen Blockcopolyamids mit einer relativen Lösungsviskosität η_{rel.} gemessen gemäß DIN EN ISO 307 in 0,5 Gew.-%iger m-Kresollösung bei 20 °C, zwischen 1,3 und 3,0, mit
b) einer wässrigen Dispersion des mindestens einen Schichtsilikats vermischt und nach einer Verweilzeit das Wasser entfernt wird.

9. Verfahren nach vorhergehendem Anspruch, **dadurch gekennzeichnet, dass**
a) die Massenkonzentration des mindestens einen wasserlösliche Polyamids, des mindestens einen wasserlöslichen Copolyamids und/oder de mindestens einen wasserlöslichen Blockcopolyamids in der Lösung zwischen 0,2 und 45 Gew.-%, bevorzugt zwischen 1,0 und 20 Gew.-%, besonders bevorzugt zwischen 2,0 und 10 Gew.-% und/oder
b) die Massenkonzentration des mindestens einen Schichtsilikats in der Dispersion zwischen 0,1 und 20 Gew.-%, bevorzugt zwischen 1,0 und 10 Gew.-%, besonders bevorzugt zwischen 1,5 und 5 Gew.-% beträgt.

10. Thermoplastische Formmasse, enthaltend ein in einer wasserunlöslichen thermoplastischen Matrixphase der Formmasse dispergiertes Tonmaterial nach einem der Ansprüche 1 bis 7.

11. Formmasse nach vorhergehendem Anspruch, **dadurch gekennzeichnet, dass**
a) der Gewichtsanteil des Tonmaterials bezogen auf die Formmasse zwischen 1 und 50 Gew.-%, bevorzugt zwischen 4 und 33 Gew.-%, besonders bevorzugt zwischen 5 und 20 Gew.-% beträgt, und/oder
b) der Gewichtsanteil der Matrixphase bezogen auf die Formmasse zwischen 50 und 99 Gew.-%, bevorzugt zwischen 67 und 96 Gew.-%, besonders bevorzugt zwischen 80 und 95 Gew.-% beträgt.

12. Formmasse nach einem der beiden vorhergehenden Ansprüche, **dadurch gekennzeichnet, dass** die thermoplastischen Matrixphase ausgewählt ist aus der Gruppe bestehend aus Polyarylensulfiden, Polylactonen, Polyestern, Polyurethanen, Polycarbonaten, Poly(meth)acrylaten, Polysulfonen, Polysiloxanen, Polyamiden, Polyetheramiden, Polyesteramiden und/oder Mischungen hiervon.

13. Formmasse nach einem der Ansprüche 10 bis 12, **dadurch gekennzeichnet, dass** mindestens ein Additiv und/oder schlagzähmodifikator, bevorzugt mit einem Gewichtsanteil von 0,3 bis 30 Gew.-%, besonders bevorzugt zwischen 0,5 und 20 Gew.-% bezogen auf die Formmasse, enthalten ist.

14. Formkörper, herstellbar aus einer Formmasse nach einem der Ansprüche 10 bis 13.

15. Verwendung eines Formkörpers nach vorhergehendem Anspruch als Rohr, Fitting, Profil für den Transport von Gasen, Druckluftleitung, Fo-lie, Behälter für Verpackungszwecke, Gehäuse für Industrie- und Kon-sumgüter oder Handy-Gehäuse.

## Claims

1. Clay material, containing at least one sheet silicate which is treated with at least one water-soluble polyamide, at least one water-soluble copolyamide and/or at least one water-soluble block copolyamide, wherein water-solubility is present when at 23°C at least 10g polyamide or copolyamide or block copolyamide are completely soluble in 1000 g water, ***characterised in that***
the proportion of sheet silicate, relative to the entire clay material, is 38 to 60% by weight and the relative solution viscosity ηᵣₑₗ of the at least one water-soluble polyamide, of the at least one water-soluble copolyamide and/or of the at least one water-soluble block copolyamide, that is measured pursuant to DIN EN ISO 307 in 0.5% by weight m-cresol solution at 20°C, is between 1.3 and 3.0.

2. Clay material according to claim 1, **characterised in that** the at least one water-soluble polyamide, at least one water-soluble copolyamide and/or at least one water-soluble block copolyamide is selected from the group comprising water-soluble polyether amides, preferably polyether amides which can be produced by polycondensation of
a) at least one aliphatic, cycloaliphatic and/or aromatic dicarboxylic acid with 6 to 36 C atoms, and
b) at least one aliphatic, cycloaliphatic and/or aromatic diamine with 2 to 36 C atoms, and/or
c) at least one diamine selected from the group comprising diethylene glycol diamine, triethylene glycol diamine, tetraethylene glycol diamine, 4,7,10-trioxa-1,13-tridecane diamine, 4,7,10,13-tetraoxa-1,16-hexadecane diamine, and/or
d) at least one polyalkylene glycol diamine, in particular polyethylene glycol diamines, polypropylene glycol diamines, polytetraethylene diamines, and/or
e) lactams and/or aminocarboxylic acids, preferably ω-aminocarboxylic acids with 5 to 12 C atoms.

3. Clay material according to one of the preceding claims, **characterised in that** the at least one water-soluble polyamide is a polycondensate comprising
a) at least one aliphatic, cycloaliphatic and/or aromatic dicarboxylic acid with 6 to 36 C atoms, preferably 6 to 24 C atoms, particularly preferred 6 to 12 C atoms, in particular adipinic acid; and
b) at least one diamine selected from the group comprising diethylene glycol diamine, triethylene glycol diamine, tetraoxahexadecane diamine, tetraethylene glycol diamine, trioxatridecane diamine, or at least one polyalkylene glycol diamine, in particular polyethylene glycol diamines, polypropylene glycol diamines, polytetraethylene diamines; preferably trioxatridecane diamine.

4. Clay material according to one of the preceding claims, **characterised in that** the relative solution viscosity ηᵣₑₗ of the at least one water-soluble polyamide, of the at least one water-soluble copolyamide and/or of the at least one water-soluble block copolyamide is between 1.4 and 2.0, in particular between 1.5 and 1.9.

5. Clay material according to one of the preceding claims, **characterised in that** the sheet silicate proportion, relative to the entire clay material, is of 38 to 55% by weight, particularly preferred 38 to 52% by weight.

6. Clay material according to one of the preceding claims, **characterised in that** the proportion of the at least one water-soluble polyamide, of the at least one water-soluble copolyamide and/or of the at least one water-soluble block copolyamide, relative to the total clay material, is of 40 to 62% by weight, preferably of 45 to 62% by weight, particularly preferred of 48 to 62% by weight.

7. Clay material according to one of the preceding claims, **characterised in that** the at least one sheet silicate is selected from the group comprising vermiculite, talcum and/or smectites, the smectites being in particular sodium montmorillonite, magnesium montmorillonite, calcium montmorillonite, aluminium montmorillonite, nontronite, beidellite, volkonskoite, hectorite, saponite, sauconite, sobockite, stevensite, svinfordite and/or kaolinite.

8. Method for producing a clay material according to one of the preceding claims, in which
a) an aqueous solution of the at least one water-soluble polyamide, of the at least one water-soluble copolyamide and/or of the at least one water-soluble block copolyamide having a relative solution viscosity ηᵣₑₗ between 1.3 and 3.0 measured pursuant to DIN EN ISO 307 in 0.5 % by weight m-cresol solution at 20°C is mixed with
b) an aqueous dispersion of the at least one sheet silicate and the water is removed after a dwell time.

9. Method according to the preceding claim, **characterised in that**
a) the mass concentration of the at least one water-soluble polyamide, of the at least one water-soluble copolyamide and/or of the at least one water soluble block copolyamide in the solution is between 0.2 and 45% by weight, preferably between 1.0 and 20% by weight, particularly preferred between 2.0 and 10% by weight and/or
b) the mass concentration of the at least one sheet silicate in the dispersion is between 0.1 and 20% by weight, preferably between 1.0 and 10% by weight, particularly preferred between 1.5 and 5% by weight.

10. Thermoplastic moulding compound, containing a clay material which is dispersed in a water-insoluble thermoplastic matrix phase of the moulding compound according to one of the claims 1 to 7.

11. Moulding compound according to the preceding claim, **characterised in that**
a) the weight proportion of the clay material, relative to the moulding compound, is between 1 and 50% by weight, preferably between 4 and 33% by weight, particularly preferred between 5 and 20% by weight, and/or
b) the weight proportion of the matrix phase, relative to the moulding compound, is between 50 and 99% by weight, preferably between 67 and 96% by weight, particularly preferred between 80 and 95% by weight.

12. Moulding compound according to one of the two preceding claims, **characterised in that** the thermoplastic matrix phase is selected from the group comprising polyarylene sulphides, polylactones, polyesters, polyurethanes, polycarbonates, poly(meth)acrylates, polysulphones, polysiloxanes, polyamides, polyether amides, polyester amides and/or mixtures hereof.

13. Moulding compound according to one of the claims 10 to 12, **characterised in that** at least one additive and/or impact modifier is contained, preferably with a weight proportion of 0.3 to 30% by weight, particularly preferred between 0.5 and 20% by weight, relative to the moulding compound.

14. Moulded article, producible from a moulding compound according to one of the claims 10 to 13.

15. Use of a moulded article according to the preceding claim, as a pipe, fitting, profile for transporting gases, compressed air pipe, foil, containers for packaging purposes, housings for industrial and consumer goods or mobile phone housings.

## Revendications

1. Matériau argileux, contenant au moins un phyllosilicate, traité par au moins un polyamide soluble dans l'eau, par au moins un copolyamide soluble dans l'eau et/ou par au moins un copolyamide à blocs soluble dans l'eau, la solubilité dans l'eau étant assurée quand, à 23°C, au moins 10 g du polyamide ou du copolyamide ou du polyamide à blocs sont entièrement solubles dans 1000 g d'eau, ***caractérisé en ce que***
la proportion du phyllosilicate, rapportée à la totalité du matériau argileux, est de 38 à 60 % en poids, et la viscosité relative en solution ηᵣₑₗ du ou des polyamides solubles dans l'eau, du ou des copolyamides solubles dans l'eau et/ou du ou des copolyamides à blocs solubles dans l'eau, mesurée selon DIN EN ISO 307 dans une solution de m-crésol à 0,5 % en poids à 20°C, est comprise entre 1,3 et 3,0.

2. Matériau argileux selon la revendication 1, **caractérisé en ce que** le ou les polyamides solubles dans l'eau, au moins le ou les copolyamides solubles dans l'eau et/ou le ou les copolyamides à blocs solubles dans l'eau sont choisis dans le groupe consistant en les polyétheramides solubles dans l'eau, de préférence les polyétheramides qui peuvent être préparés par polycondensation
a) d'au moins un acide dicarboxylique aliphatique, cycloaliphatique et/ou aromatique ayant 6 à 36 atomes de carbone, et
b) d'au moins une diamine aliphatique, cycloaliphatique et/ou aromatique ayant 2 à 36 atomes de carbone, et/ou
c) d'au moins une diamine choisie dans le groupe consistant en la diéthylèneglycoldiamine, la triéthylèneglycoldiamine, la tétraéthylèneglycoldiamine, la 4,7,10-trioxa-1,13-tridécanediamine, la 4,7,10,13-tétraoxa-1,16-hexadécanediamine, et/ou
d) d'au moins une polyalkylèneglycoldiamine, en particulier de polyéthylèneglycoldiamines, de polypropylèneglycoldiamines, de polytétraéthylènediamines et/ou
e) de lactames et/ou d'acides aminocarboxyliques, de préférence d'acides ω-aminocarboxyliques ayant 5 à 12 atomes de carbone.

3. Matériau argileux selon l'une des revendications précédentes, **caractérisé en ce que** le ou les polyamides solubles dans l'eau sont des produits de polycondensation
a) d'au moins un acide dicarboxylique aliphatique, cycloaliphatique et/ou aromatique ayant 6 à 36 atomes de carbone, de préférence 6 à 24 atomes de carbone, d'une manière particulièrement préférée 6 à 12 atomes de carbone, en particulier de l'acide adipique ; et
b) d'au moins une diamine choisie dans le groupe consistant en la diéthylèneglycoldiamine, la triéthylène-glycoldiamine, la tétraoxahexadécanediamine, la tétraéthylèneglycoldiamine, la trioxatridécanediamine ; ou d'au moins une polyalkylèneglycoldiamine, en particulier de polyéthylèneglycoldiamines, de polypropylèneglycoldiamines, de polytétraéthylènediamines ; de préférence de la trioxatridécanediamine.

4. Matériau argileux selon l'une des revendications précédentes, **caractérisé en ce que** la viscosité relative en solution ηᵣₑₗ du ou des polyamides solubles dans l'eau, du ou des copolyamides solubles dans l'eau et/ou du ou des copolyamides à blocs solubles dans l'eau, est comprise entre 1,4 et 2,0, en particulier entre 1,5 et 1,9.

5. Matériau argileux selon l'une des revendications précédentes, **caractérisé en ce que** la proportion du phyllosilicate, rapportée à la totalité du matériau argileux, est de 38 à 55 % en poids, de préférence de 38 à 52 % en poids.

6. Matériau argileux selon l'une des revendications précédentes, **caractérisé en ce que** la proportion du ou des polyamides solubles dans l'eau, du ou des copolyamides solubles dans l'eau et/ou du ou des copolyamides à blocs solubles dans l'eau, rapportée à la totalité du matériau argileux, est de 40 à 62 % en poids, de préférence de 45 à 62 % en poids, d'une manière particulièrement préférée de 48 à 62 % en poids.

7. Matériau argileux selon l'une des revendications précédentes, **caractérisé en ce que** le ou les phyllosilicates sont choisis dans le groupe consistant en la vermiculite, le talc et/ou les smectites, les smectites étant en particulier la montmorillonite sodique, la montmorillonite magnésique, la montmorillonite calcique, la montmorillonite aluminique, la nontronite, la béidellite, la volkonskoïte, l'hectorite, la saponite, la sauconite, la sobockite, la stévensite, la svinfordite et/ou la kaolinite.

8. Procédé de fabrication d'un matériau argileux selon l'une des revendications précédentes, dans lequel on mélange
a) une solution aqueuse du ou des polyamides solubles dans l'eau, du ou des copolyamides solubles dans l'eau et/ou du ou des copolyamides à blocs solubles dans l'eau, présentant une viscosité relative ηᵣₑₗ, mesurée selon DIN EN ISO 307 dans une solution de m-crésol à 0,5 % en poids, à 20°C, comprise entre 1,3 et 3,0, avec
b) une dispersion aqueuse du ou des phyllosilicates,
et, dans lequel, au bout d'un certain temps de séjour, on élimine l'eau.

9. Procédé selon la revendication précédente, **caractérisé en ce que**
a) la concentration massique du ou des polyamides solubles dans l'eau, du ou des copolyamides solubles dans l'eau et/ou du ou des copolyamides à blocs solubles dans l'eau est, dans la solution, comprise entre 0,2 et 45 % en poids, de préférence entre 1,0 et 20 % en poids, d'une manière particulièrement préférée entre 2,0 et 10 % en poids, et/ou
b) la concentration massique du ou des phyllosilicates dans la dispersion est comprise entre 0,1 et 20 % en poids, de préférence entre 1,0 et 10 % en poids, d'une manière particulièrement préférée entre 1,5 et 5 % en poids.

10. Masse à mouler thermoplastique, contenant un matériau argileux selon l'une des revendications 1 à 7, dispersé dans une phase de matrice thermoplastique insoluble dans l'eau du mélange à mouler.

11. Masse à mouler selon la revendication précédente, **caractérisé en ce que**
a) la proportion pondérale du matériau argileux, rapportée à la masse à mouler, est comprise entre 1 et 50 % en poids, de préférence entre 4 et 33 % en poids, d'une manière particulièrement préférée entre 5 et 20 % en poids, et/ou
b) la proportion pondérale de la phase de matrice, rapportée à la masse à mouler, est comprise entre 50 et 99 % en poids, de préférence entre 67 et 96 % en poids, d'une manière particulièrement préférée entre 80 et 95 % en poids.

12. Masse à mouler selon l'une des deux revendications précédentes, **caractérisé en ce que** la phase de matrice thermoplastique est choisie dans le groupe consistant en les poly(sulfures d'arylène), les polylactones, les polyesters, les polyuréthannes, les polycarbonates, les poly(méth)acrylates, les polysulfones, les polysiloxanes, les polyamides, les polyétheramides, les polyesteramides et/ou les mélanges de ceux-ci.

13. Masse à mouler selon l'une des revendications 10 à 12, **caractérisé en ce qu'**il contient au moins un additif et/ou un modificateur au choc, de préférence selon une proportion pondérale, rapportée à la masse à mouler, de 0,3 à 30 % en poids, d'une manière particulièrement préférée comprise entre 0,5 et 20 %.

14. Objet moulé pouvant être fabriqué à partir d'une masse à mouler selon l'une des revendications 10 à 13.

15. Utilisation d'un objet moulé selon la revendication précédente en tant que tube, raccord, profilé pour le transport de gaz, conduite d'air comprimé, feuille, récipient à des fins de conditionnement, boîtier pour un produit industriel, un bien de consommation ou un téléphone portable.
